# EUROPEAN PATENT SPECIFICATION

(11) **EP 1 697 135 B1**
(45) Date of publication and mention of the grant of the patent: **09.05.2012**
(21) Application number: 04808512.0
(22) Date of filing: 21.12.2004
(51) Int. Cl.: B29C 43/30

(54) **Process for making a homogeneous amorphous marble flooring**
Herstellungsverfahren für einen boden aus homogenem amorphem Marmor
Procede de fabrication d'un plancher en marbre amorphe et homogene

(30) Priority: 23.12.2003 KR 2003095541
(43) Date of publication of application: 06.09.2006
(73) Proprietor: LG Chem. Ltd., Seoul 150-010 (KR)
(72) Inventor: BAHNG, Keuk-Pil, Cheongju-si, Chungcheongbuk-do 360-776 (KR); MAENG, Hak-Myun, Gyeonggi-do 427-040 (KR); KIM, Jang-Ki, Seoul 138-229 (KR)
(74) Representative: HOFFMANN EITLE
(86) International application number: PCT/KR2004/003381
(87) International publication number: WO 2005/061230

(56) References cited:
- EP-A2- 0 743 154
- JP-A- 7 052 156
- KR-A- 19990 069 415
- US-A- 2 917 781
- US-A- 4 888 145
- US-A- 5 063 093
- US-B1- 6 180 035
- US-B1- 6 224 804

## Description

### Technical Field

The present invention relates to a manufacturing process of a synthetic homogeneous amorphous marble flooring, having a novel appearance.

### Background Art

Composition synthetic marble flooring exhibit excellent endurance and an aesthetically pleasing appearance, and are mainly manufactured such that spot color chips of two or three different types are mixed with a synthetic compound and the mixture undergoes hot rolling, or a predetermined amount of the spot color chips are sprayed onto a pre-manufactured synthetic sheet and the sheet undergoes the hot rolling.

After that, the base sheet is rotated and laminated after the primary rolling, and undergoes a secondary rolling so as to form the amorphous marble pattern, and is sanded and buffed. This process (Korean Patent No. 249,569) is well known, and can remove the formality of the marble, but is limited to manufacture the composition flooring.

Moreover, in the conventional vinyl flooring manufactured by the conventional homogeneous press process, the marble pattern exhibits limited variation.

### Disclosure of Invention

### Technical Problem

Therefore, the present invention has been made in view of the above problems, and it is an object of the present invention to provide a novel homogeneous amorphous marble flooring manufactured by applying a low temperature process previously utilized only in manufacturing a composition vinyl flooring and an appearance of the amorphous marble flooring with an amorphous marble pattern by calendering while rotating and laminating the base sheet, and by applying a face-to-face pressing process in the conventional pressing of manufacturing the conventional homogeneous marble flooring, and a method for manufacturing the same.

### Technical Solution

In accordance with an aspect of the present invention, the above and other objects can be accomplished by the provision of a method of manufacturing a homogeneous amorphous marble flooring, comprising the steps of kneading a synthetic resin compound with spot color chips having various colors and primarily rolling the kneaded compound to manufacture a primarily rolled sheet, laminating the primarily rolled sheets while cutting the sheet to have a predetermined size and rotating the sheet, performing secondary rolling the laminated sheets by a low-temperature calendering at the temperature of 60 to 100 °C to manufacture a semi-manufactured homogeneous amorphous marble flooring having wave patterns and coarse surface, pressing two pieces of the semi-manufactured homogeneous amorphous marble floorings by face-to-face pressing; and cutting the pressed semi-manufactured homogeneous amorphous marble flooring into two pieces in the horizontal direction, and then sanding and buffing the cut pieces.

Preferably, a rotation equipment for rotating the primarily rolled sheet after cutting utilizes a vacuum suction rotation equipment, and the lamination is performed by a step type continuous lamination for continuously laminating the sheets in a step shape.

According to the present invention, since the rotation equipment is installed to a manufacturing line so as to cut a sheet by a predetermined size and to laminate the same in a step-shape while rotating the sheets, the continuous work is possible and high pressure rolling can be implemented.

An vacuum suction for laminating base sheet of a vacuum suction type rotation equipment is obtained by adding at least one of the substituted polyglycol ether as low-temperature processing additives, and a mixture of fatty alcohol partial esters and fatty acid esters to the synthetic resin compound, and maintaining the lower 10 °C to 20 °C processing temperature than the conventional processing temperature.

Since the base sheet is soft and fluttered when the surface temperature of the base sheet after the primary rolling is higher than 140 °C, the vacuum suction cannot be performed in the rotation equipment. The vacuum suction cannot be also performed due to cracks when the surface temperature of the base sheet is too low. The present invention adds the low temperature processing additives to the synthetic resin compound so as to maintain the surface temperature of the base sheet lower 10 °C to 20 °C in temperature than the surface temperature of the conventional base sheet and to allow easy work.

The present invention provides a method of manufacturing a homogeneous amorphous marble flooring, comprising the steps of manufacturing a sheet by kneading spot color chips having various colors with a compound containing 200 to 350 parts by weight of calcium carbonate as a filler, 20 to 40 parts by weight of a plasticizer, 3 to 10 parts by weight of an epoxy, 2 to 10 parts by weight of a Ba-Zn based stabilizer, 2 to 10 parts by weight of a low temperature process additives, and a variety of pigments, in 100 parts by weight of polyvinyl chloride, and primarily rolling the same, laminating the primarily rolled sheet while cutting the primarily rolled sheet into a sheet with a predetermined size and rotating the primarily rolled sheet, manufacturing a semi-manufactured homogeneous amorphous marble flooring having wave patterns and a coarse surface by performing a secondary rolling in the laminating step using low-temperature calendering at 60 °C to 100 °C of calender roll temperature, pressing two pieces of semi-nanufactured homogeneous amorphous marble flooring by face-to-face pressing, and cutting the pressed semi-mandactured homogeneous amorphous marble flooring in the horizontal direction into two pieces and sanding, and buffing the two pieces.

The low temperature processing additive employed in the present invention is at least one selected from among substituted polyglycol ethers, a mixture of fatty alcohol partial esters and fatty acid esters, preferably a combination of them.

Synthetic resins, which may be employed in the present invention, include polyvinyl chloride (PVC), but the present invention is not limited to the same, and any thermal plastic resin capable of being rolled can be used as the synthetic resin in the present invention.

The present invention relates to a manufacturing method of a homogeneous amorphous marble flooring, and the manufacturing process generally includes two processes. First is the process of producing semi-manufactured amorphous marble flooring, and second is a face-to-face pressing, sanding, and buffing process.

In the semi-manufactured amorphous marble sheet process, multi-colored spot color chips are kneaded with the compound, and the kneaded compound is primarily rolled into a sheet. The sheet is rotated and laminated, and the laminated sheet is secondarily rolled by low-temperature calendering to yield a semi-manufactured amorphous marble sheet having wave patterns and coarse surface. Though this process has been for the production of composition vinyl flooring in the conventional art, the present invention expands this process to include the wave patterns and the coarse surface.

Moreover, the present invention employs the amorphous marble appearance, not present in conventional vinyl flooring manufactured by the conventional homogeneous pressing, and incorporates the new process of face-to-face pressing in addition to the pressing so as to manufacture a novel homogeneous synthetic marble flooring.

The difference between composition vinyl flooring and homogeneous vinyl flooring is defined in KS (Korean Standard) M3802 which states that vinyl flooring containing 30 % or more additives is homogeneous vinyl flooring and flooring containing 30 % or less additives is composition vinyl flooring.

In particular, the low temperature calendering process employed in the present invention maintains a low temperature, that is, 60 °C to 100 °C, of roll for applying high-temperature pressing and low-temperature calendering to the uniformly-laminated sheet having a specific thickness, based on a low temperature treatment capable of laminating the base sheet by lifting the base sheet using vacuum rotation equipment at temperatures below 140 °C.

The present invention relates to manufacturing a novel finished homogeneous amorphous marble flooring by manufacturing a semi-manufactured homogeneous amorphous marble flooring having wave patterns and coarse surface by the calendering and by performing face-to-face pressing on the semi-manufactured homogeneous amorphous marble flooring, and by performing the splitting, sanding, and buffing. The wave pattern and coarse surface are formed by high temperature rolling and calendering, and in more detail, are cracks (coarse surface) generated when the wave patterns and the hot base sheet are processed by high-temperature rolling and low-temperature calendering. The low-temperature processing additives used in the low-temperature treatment allow the process to be easily performed at the lower temperature than the conventional process, and in more detail, allow the lamination of the base sheet in the vacuum suction.

The present invention is made to obtain the wave patterns to form a distinguishable appearance, and the coarse surface is obtained by low-temperature calendering in order to form the wave patterns. In other words, since the coarse surface is appeared when the low-temperature calendering is performed, in order to overcome the coarse surface, the face-to-face pressing and the sanding and buffing are performed so as to make the surface smooth and to make the wave patterns into the soft marble patterns.

According to the preferred embodiment of the present invention, as a result of manufacturing the semi-manufactured homogeneous amorphous marble flooring having the wave patterns and the coarse surface by the high-temperature rolling and the low-temperature calendering, and applying the face-to-face pressing and the sanding and buffing to the semi-manufactured homogeneous amorphous marble flooring, it is confirmed that the soft marble patterns different from the appearance of the conventional homogeneous amorphous marble flooring can be obtained.

### Advantageous Effects

As described above, the present invention applies the low temperature processing and additives utilized only in the composition vinyl flooring and amorphous marble manufacturing process to the homogeneous vinyl flooring, and provides various appearances and high quality to the homogeneous vinyl flooring different from the conventional homogeneous marble flooring manufactured by the conventional pressing by employing the amorphous marble appearance and new pressing process.

### Description of Drawings

The above and other objects, features and other advantages of the present invention will be more clearly understood from the following detailed description taken in conjunction with the accompanying drawings, in which:

Fig. 1 is a schematic view illustrating a process for manufacturing semi-manufactured flooring according to the present invention;

Fig. 2 is a view illustrating a face-to-face process according to the present invention;

Fig. 3 is a view illustrating a splitting process for splitting semi-manufactured flooring manufactured by pressing into two pieces according to the present invention;

Fig. 4 is a photograph of a homogeneous amorphous flooring according to the preferred embodiment of the present invention; and

Fig. 5 is a photograph of a homogeneous amorphous flooring according to another embodiment of the present invention.

### Best Mode

Hereinafter, the present invention will be described in detail with reference to the accompanying drawings.

According to the present invention, a finished homogeneous amorphous marble flooring is manufactured by calendering, face-to-face pressing, and sanding.

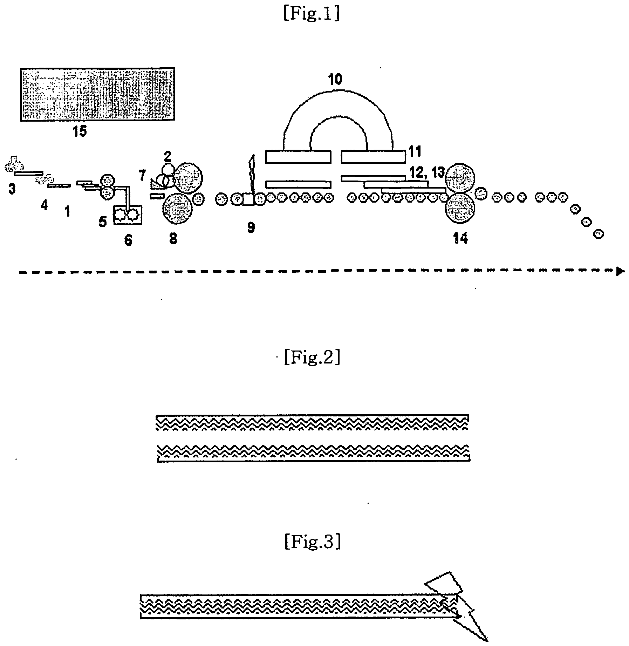

Fig. 1 is a schematic view illustrating a process for manufacturing a semi-manufactured flooring according to the present invention. The process largely includes a raw material compounding process, a kneading process of homogeneously heating and pressing the compounded raw materials, a mixing process of homogeneously mixing the raw materials, and a calendering process of forming an amorphous marble pattern.

In more detail, in order to manufacture the synthetic homogeneous amorphous flooring, first, polyvinyl chloride (PVC) compound is kneaded with multi-colored spot color chips and the kneaded compound undergoes a primary rolling so as to manufacture a base sheet, the base sheet is cut and rotated so as to be laminated, and the laminated sheet is processed by secondary rolling by means of a low temperature calendering process, so that the semi-manufactured flooring having wave patterns and coarse surface is manufactured.

The composition of the base sheet 1 comprises 200 to 350 parts by weight of calcium carbonate as a filler, 20 to 40 parts by weight of dioctyl phthalate (DOP) as a plasticizer, 3 to 10 parts by weight of an epoxy, 2 to 10 parts by weight of a Ba-Zn based stabilizer, 2 to 10 parts by weight of a low temperature process additive, and a variety pigment, in 100 parts by weight of PVC (800 to 1,000 degrees of polymerization).

Generally, the term "homogeneous" means that the components except for calcium carbonate are contained equal to or more than 30 %. The "binder" defined in Korean Standard (KS) contains a vinyl resin, a plasticizer, a stabilizer, etc., the composition of the binder satisfies the definition of "homogeneous".

The spot color chip 2 is manufactured such that pigments are compounded into the PVC and the compounded sheet is rolled, and the rolled sheet is pulverized into 0.5 mm to 20 mm by using a pulverizing machine, and the chips having various hardness are used by varying content of the plasticizer different from the content in the base sheet.

The manufacturing process of the homogeneous amorphous marble flooring according to the present invention will be described in detail as follows.

First, a predetermined amount of liquid and powder raw materials are compounded and distributed, the distributed raw materials are kneaded in a Banbury mixer 3 at 120 °C to 150 °C. The kneaded raw materials are manufactured into a cake-state base sheet 1 using a mixing roll 4 at 100°C to 130°C.

The base sheet 1 and the spot chips 2 having various colors are made into a sheet with a thickness of less than 3.0 mm by a joining calender 5, the sheet is pulverized and heated in an oven 17 at 200°C to 250°C, the heated sheet 1 is rolled into a sheet with a thickness of 1.0 mm to 5.0 mm by a primary calender 8 at 110°C to 150°C, the sheet is cut by a cutter 9, and the cut sheet is sucked in vacuum state and rotated by 90 degrees using a 90-degree-rotation equipment 10 and laminated 12 at a predetermined interval to have a step-shape. Here, "laminated at a predetermined interval" means to be laminated while keeping the predetermined interval 13. The spot chips 2 may be independently injected during the primary calendering.

The cutter 9 serves to cut the primarily-rolled base sheet 1 to a predetermined length, and is constructed to cut the base sheet by the predetermined length by detecting the length of the cut sheet 1 using an optical sensor.

The rotation equipment 10 is a vacuum-90-degree rotation equipment, and includes a hollow quadrangular case and a large number of silicon caps 11 attached to the lower side of the case, so as to suck the primarily-rolled base sheet 1 using the vacuum caps 11 at a negative pressure of 2 to 20 kg/cm2, when the sheet 1 is arrived at a desired position. The sucked base sheet 1 is laminated 12 while being rotated along the rails, and is supplied to the secondary calender 14.

Meanwhile, the primarily-rolled base sheet 1 is manufactured by kneading and rolling the compounded PVC and the spot color chips 2, and is marbled in the length direction.

Further, it is preferred to maintain a laminating interval of 100 mm to 500 mm after the rotation by 90 degrees. The pattern of the marble is varied according to the laminating interval and the number of the laminated layers, in other words, if the interval and the number of the laminated layers is small, the desired amorphous marble cannot be obtained because a marble slightly shifted in the width direction is appeared in the existing directed marble when the primarily formed marble is secondarily rolled after the rotation by 90 degrees.

The amount of laminate base sheets 1 depends on the thickness of the sheet 1 and the laminated interval 13, and preferably 2 to 10 sheets are laminated.

These laminated sheets are calendered by the secondary calender 14 at a low temperature of 60 °C to 100 °C, so that the semi-manufactured marble flooring having the wave patterns and coarse surface is manufactured. At that time, the marbles formed in the length direction are rotated 90 degrees and changed into natural amorphous marble, and the base sheet 1 and the spot color chips 2 are naturally associated with each other. The thickness of the secondary rolled sheet is maintained at 2.5 mm to 4.5 mm.

Fig. 2 is a view illustrating joining the semi-manufactured flooring by pressing in the face-to-face contact manner according to the present invention. The secondary-rolled sheet is cut into sheets of 1 m x 1 m and the sheets are inserted into a mold to be faced each other and pressed at 150 °C to 200 °C.

Fig. 3 is a view illustrating a splitting process for splitting semi-manufactured flooring into two pieces in the face-to-face pressing according to the present invention. The face-to-face semi-manufactured flooring is cut into pieces with a width of 3 to 5 mm, and the homogeneous amorphous marble flooring with a width of 2 to 3 mm is manufactured by sanding the pieces.

In the present invention, the coarse surface is smooth and the wave patterns is soft through the face-to-face pressing and the sanding, so that the amorphous marble flooring looks like real marble. The homogeneous amorphous marble flooring according to the present invention has the same endurance and stain-resistance as the conventional flooring manufactured by homogeneous pressing and sanding, the homogeneous amorphous marble flooring having scratch or staining can be restored to its original state by easily removing the scratch or staining, and there are no gaps between the homogeneous amorphous marble flooring after installing them.

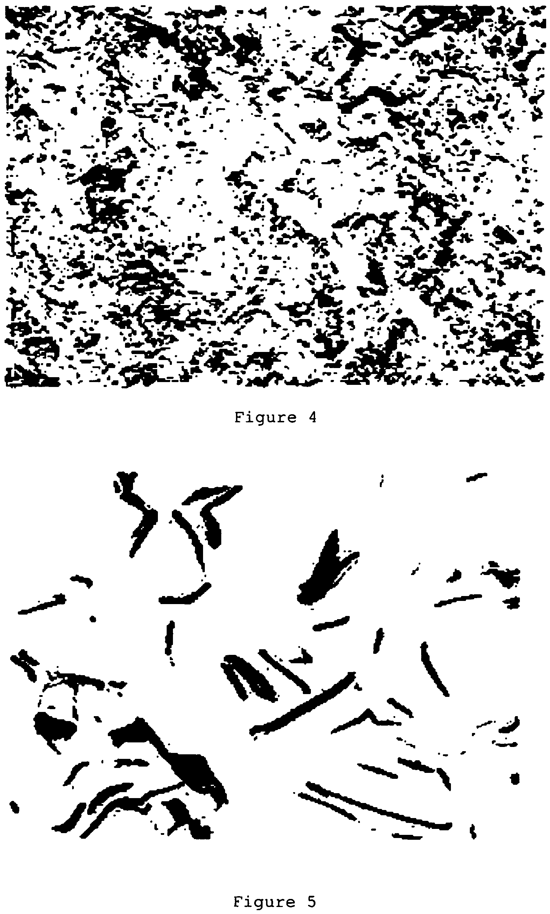

Figs. 4 and 5 are photographs of finished homogeneous amorphous marble flooring according to the present invention. The conventional marble flooring is manufactured by pressing the pieces or the chips and has marble patterns without directional marble patterns or formal marble patterns. However, since the conventional marble flooring uses the same pattern frequently, the conventional marble flooring becomes monotony and old, on the contrary, since the homogeneous amorphous marble flooring according to the present invention has a soft marble pattern different from the conventional marble flooring, the homogeneous amorphous marble flooring according to the present invention is new and distinguishable.

### Mode for Invention

In order to manufacture the homogeneous amorphous marble flooring according to the present invention, a predetermined amount of respective liquid and powder raw materials are compounded and distributed. The uniformly distributed raw materials are kneaded in the Banbury mixer 3 by a screw at 120 °C to 150 °C, and the kneaded raw materials are manufactured into a cake-shaped base sheet 1 by using the mixing roll 4 at 100°C to 130°C.

The base sheet 1 and the sport chip 2 having various colors are manufactured into a sheet with a width lower than 3.0 mm by using the joining calender 5.

The base sheet 1 and the spot chips 2 having various colors are made into a sheet with a thickness of less than 3.0 mm by the joining calender 5, the sheet is pulverized and heated in an oven 17 at 200 to 250 °C, the heated sheet 1 is made into a sheet with a thickness of 1.0 to 5.0 mm by the primary calender 8 at 110 to 150 °C, the sheet is cut to a predetermined size, rotated by 90 degrees by the suction cap 11 of the rotation equipment 10, and laminated 12, and two or ten sheets laminated in the predetermined intervals 13 pass through the secondary calender 14 at 60 to 100 °C, so that a sheet with a thickness of 2.5 to 4.5 mm having the wave pattern and the coarse surface is manufactured by the low temperature calendering.

The secondarily rolled sheet is cut into a 1 m x 1 m sheet so as to manufacture the semi-manufactured marble flooring, the semi-manufactured marble flooring is placed in the mold during the face-to-face pressing and pressed at 150 to 200 °C (See Fig. 2), the joined sheet is split into two pieces in order to manufacture a semi-manufactured marble flooring having a thickness of 3 to 5 mm (See Fig. 3), and thus the homogeneous amorphous marble flooring with a thickness of 2 to 3 mm is manufactured by sanding the pieces

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A method of manufacturing a homogeneous amorphous marble flooring, comprising the steps of:
kneading a synthetic resin compound with spot color chips having various colors and primarily rolling the kneaded compound to manufacture a primarily rolled sheet;
laminating the primarily rolled sheets while cutting the sheet to have a predetermined size and rotating the sheet;
performing secondary rolling the laminated sheets by a low-temperature calendering at the temperature of 60 to 100 °C to manufacture a semi-manufactured homogeneous amorphous marble flooring having wave patterns and coarse surface;
pressing two pieces of the semi-manufactured homogeneous amorphous marble floorings by face-to-face pressing; and
cutting the pressed semi-nanufactured homogeneous amorphous marble flooring into two pieces in the horizontal direction, and then sanding and buffing the cut pieces.

2. The method as set forth in claim 1, wherein the primarily rolled sheets are rotated with a vacuum suction rotation equipment, and the primarily rolled sheets are laminated by a step type continuous lamination for continuously laminating the sheets in a step shape.

3. The method as set forth in claim 1, wherein the synthetic resin compound is added with at least one of the substituted polyglycol ether and a mixture of fatty alcohol partial esters and fatty acid esters to maintain processing temperature by 10 to 20 °C lower than conventional processing temperature.

4. The method as set forth in claim 1 wherein the synthetic resin compound contains 200 to 350 parts by weight of calcium carbonate, 20 to 40 parts by weight of a plasticizer, 3 to 10 parts by weight of an epoxy, 2 to 10 parts by weight of a Ba-Zn based stabilizer, 2 to 10 parts by weight of a low temperature process additive, and a variety of pigments, in 100 parts by weight of polyvinyl chloride.

## Patentansprüche

1. Verfahren zur Herstellung eines homogenen, amorphen Marmorbodenbelags, das die Schritte umfasst:
Kneten einer synthetischen Harzverbindung mit Fleck-Farbchips in verschiedenen Farben und primäres Auswalzen der gekneteten Verbindung, um eine primäre, gewalzte Bahn herzustellen;
Laminieren der primären, gewalzten Bahnen während die Bahn auf eine vorbestimmte Größe geschnitten wird und Rotieren der Bahn;
Durchführen eines sekundären Walzens der laminierten Bahnen durch Niedertemperatur-Kalantrieren bei einer Temperatur von 60 bis 100°C, um einen halbfertigen homogenen, amorphen Marmorbodenbelag mit Wellmustern und rauer Oberfläche herzustellen;
Verpressen von zwei Teilen des halbfertigen homogenen, amorphen Marmorbodenbelags durch Front-an-Front-Pressen; und
Schneiden des gepressten halbfertigen homogenen, amorphen Marmorbodenbelags in zwei Stücke in horizontaler Richtung und anschließendes Schleifen und Polieren der geschnittenen Stücke.

2. Verfahren gemäß Anspruch 1, worin die primären, gewalzten Bahnen mit einer Vakuumsaugrotationsvorrichtung rotiert werden, und die primären, gewalzten Bahnen durch kontinuierliche Laminierung vom Stufentyp laminiert werden, um die Bahnen kontinuierlich in einer Stufenform zu laminieren.

3. Verfahren gemäß Anspruch 1, worin die synthetische Harzverbindung mit mindestens einem aus substituierten Polyglycolether und einer Mischung von partiellen Fettalkoholestern und Fettsäureestern versetzt ist, um eine Verarbeitungstemperatur aufrecht zu erhalten, die 10 bis 20°C niedriger als die reguläre Verarbeitungstemperatur ist.

4. Verfahren gemäß Anspruch 1, worin die synthetische Harzverbindung 200 bis 350 Gew.-Teile Calciumcarbonat, 20 bis 40 Gew.-Teile eines Weichmachers, 3 bis 10 Gew.-Teile an Epoxy, 2 bis 10 Gew.-Teile eines Stabilisators auf Ba-Zn-Basis, 2 bis 10 Gew.-Teile eines Niedertemperaturverarbeitungsadditivs und eine Auswahl von Pigmenten in 100 Gew.-Teilen Polyvinylchlorid enthält.

## Revendications

1. Procédé de fabrication d'un revêtement de sol en marbre amorphe et homogène, comprenant les étapes qui consistent :
à malaxer un composé de résine synthétique avec des copeaux de couleur d'accompagnement ayant différentes couleurs et à effectuer un laminage principal du composé malaxé afin de fabriquer une feuille principalement laminée;
à stratifier les feuilles principalement laminées lors du découpage de la feuille pour avoir une taille prédéterminée et à faire tourner la feuille ;
à effectuer un laminage secondaire des feuilles stratifiées par calandrage à basse température, à une température de 60 à 100°C, pour fabriquer un revêtement de sol en marbre amorphe et homogène semi-fabriqué ayant des motifs d'onde et une surface rugueuse ;
à presser deux morceaux des revêtements de sol en marbre amorphe et homogène semi-fabriqués en effectuant un pressage face-à-face ; et
à couper le revêtement de sol en marbre amorphe et homogène semi-fabriqué pressé en deux morceaux dans la direction horizontale, puis à sabler et à polir les morceaux découpés.

2. Procédé tel que défini dans la revendication 1, dans lequel les feuilles principalement laminées sont mises en rotation par un équipement de rotation d'aspiration sous vide, et les feuilles principalement laminées sont stratifiées par une stratification continue de type étagé afin de stratifier les feuilles, de manière continue, en une forme étagée.

3. Procédé tel que défini dans la revendication 1, dans lequel le composé de résine synthétique est ajouté à au moins un élément parmi l'éther polyglycole substitué et un mélange d'esters partiels d'alcool gras et d'esters d'acide gras afin de maintenir la température de traitement par 10 à 20°C inférieure à la température de traitement conventionnelle.

4. Procédé tel que défini dans la revendication 1, dans lequel le composé de résine synthétique contient 200 à 350 parties en poids de carbonate de calcium, 20 à 40 parties en poids d'un plastifiant, 3 à 10 parties en poids d'un époxy, 2 à 10 parties en poids d'un stabilisant à base de Ba-Zn, 2 à 10 parties en poids d'un additif de traitement à basse température, et une variété de pigments, dans 100 parties en poids de chlorure de polyvinyle.
